# EUROPEAN PATENT SPECIFICATION

(11) **EP 4 353 640 B1**
(45) Date of publication and mention of the grant of the patent: **25.06.2025**
(21) Application number: 22201190.0
(22) Date of filing: 12.10.2022
(51) Int. Cl.: B65G 53/46, B65G 53/40, B65G 67/24, B65G 69/20, B05B 7/14

(54) **UNLOADING DEVICE AND UNLOADING SYSTEM**
ENTLADEVORRICHTUNG UND ENTLADESYSTEM
DISPOSITIF DE DÉCHARGEMENT ET SYSTÈME DE DÉCHARGEMENT

(43) Date of publication of application: 17.04.2024
(73) Proprietor: EcoUp Oyj, 90100 Oulu (FI)
(72) Inventor: Hirvensalo, Kalevi, 25210 Vartsala (FI); Hirvensalo, Ilari, 04620 Mäntsälä (FI)
(74) Representative: Wilenius, Jami Juhani

(56) References cited:
- EP-A1- 0 665 342
- CA-A1- 2 313 395
- US-A- 4 236 654
- US-A- 4 465 239
- US-A- 5 829 649

## Description

### FIELD OF THE INVENTION

The invention relates to devices and systems for unloading materials, and especially for unloading and decompressing compressed fibrous materials.

### PRIOR ART

Typical insulating materials are fibrous materials comprising glass fibers, mineral fibers, cellulose fibers or other synthetic or natural fibers. Installed insulating materials are usually in a form which includes a significant amount of air within the material, i.e. a relatively small amount of material fills a relatively large volume. This is advantageous for installed insulating materials but a disadvantage when storing and transporting the materials. Therefore, insulating materials are usually compressed in volume during storage and transportation, and then decompressed at an installation site.

This aspect is especially important when handling loose fill insulation, such as blowing wool insulation or blown-in insulation, or even saw dust insulation. The loose insulation is usually tightly wrapped in plastic bags during transport. These bags are opened at an installation site and the contents poured into a blower unit which then transfer the insulation to a desired location through a hose. This requires an operator at both ends of the hose and use of the bags is slow and produces excess waste.

US4465239 discloses a feeder assembly for insulation blowing machines. A device disclosed in the patent includes a hopper for receiving fibrous insulation material fed from compressed bags of insulation material. Various shredding shafts loosen the fibers before the loose material is blown out from the device through a hose.

### BRIEF DESCRIPTION OF THE INVENTION

The object of the invention is an unloading device and an unloading system which alleviate the drawbacks of the prior art.

Object of the invention is achieved with an unloading device having a number of different type of mixers for opening up the compressed loose fibers and feeding them loosely to a rotary airlock feeder to be blown through a hose. An unloading system of the present disclosure further discloses a container with reciprocating feeders for feeding fibrous material to the unloading device.

### BRIEF DESCRIPTION OF THE FIGURES

The invention is now described in more detail in connection with preferred embodiments, with reference to the accompanying drawings, in which:
Fig. 1 illustrates a front/side view of an unloading device according to an embodiment;
Fig. 2 illustrates a back/side view of an unloading device according to an embodiment;
Fig. 3 illustrates a front view of an unloading device according to an embodiment;
Fig. 4 shows a cross-section A-A of an unloading device of Fig. 3;
Fig. 5 illustrates a horizontal feeder according to an embodiment;
Fig. 6 shows a detail of the horizontal feeder of Fig. 5;
Fig. 7 illustrates a vertical feeder according to an embodiment;
Fig. 8 illustrates an unloading system installation according to an embodiment;
Fig. 9 shows a cross-section of an unloading device attached to a container; and
Fig. 10 illustrates a remote controller according to an embodiment.

### DETAILED DESCRIPTION OF THE INVENTION

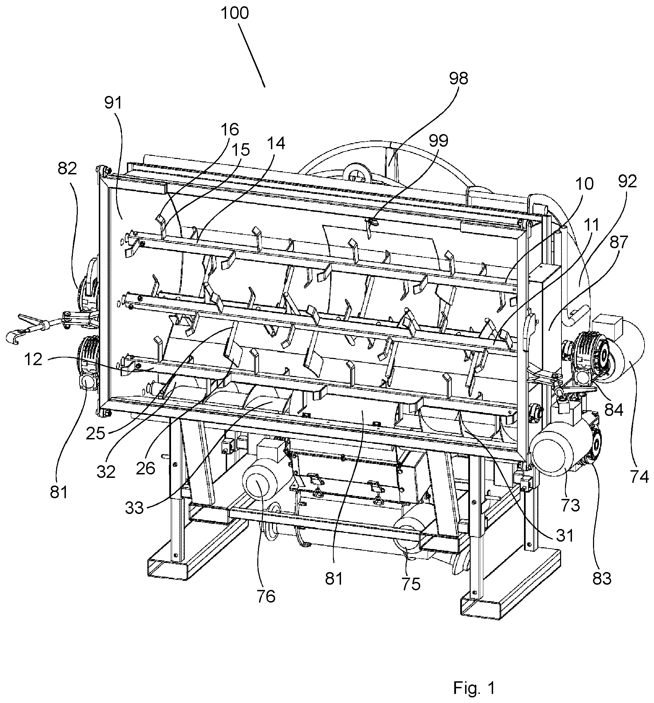

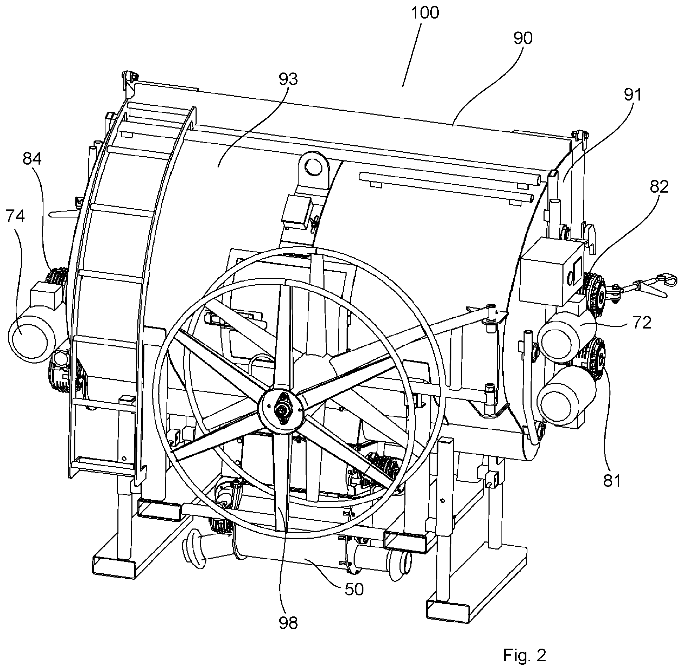

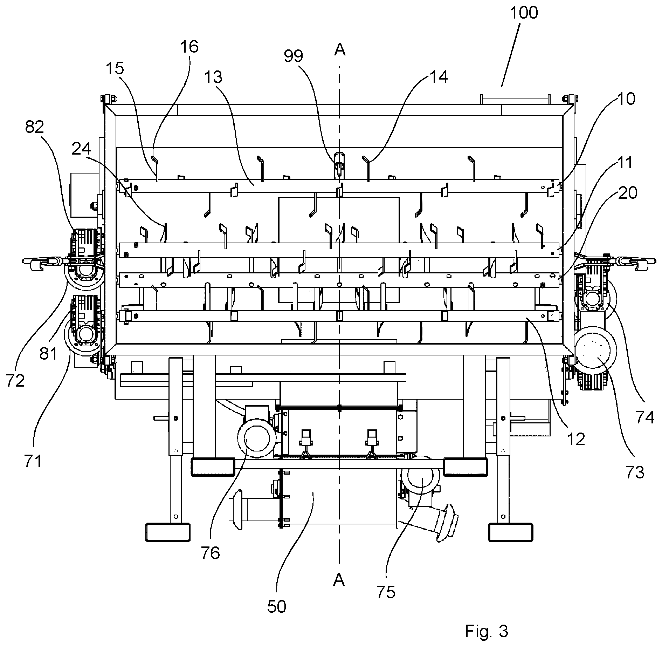

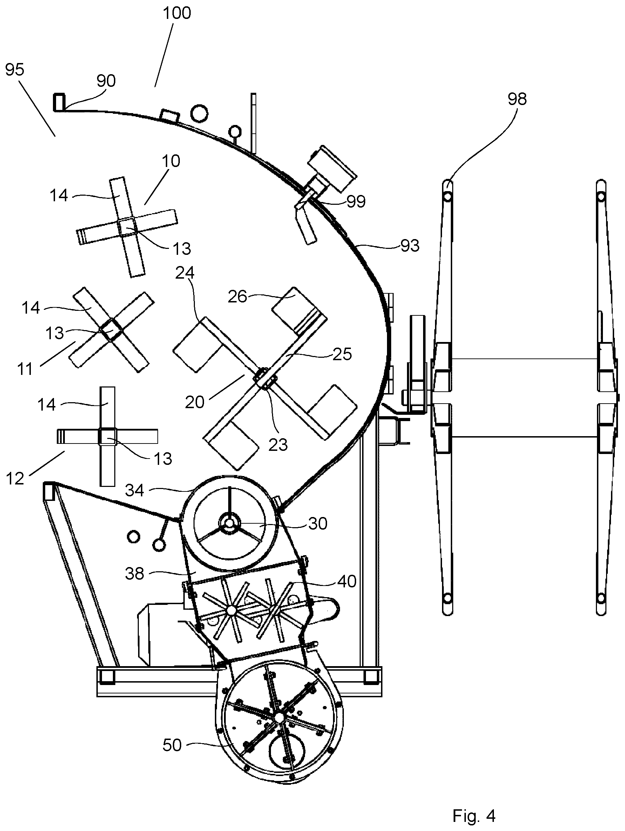

Figures 1-4 illustrate different views of an embodiment of an unloading device 100 of the present disclosure. The unloading device 100 comprises a body 90 preferably made of a sheet metal and having side walls 91, 92. The side walls are preferably planar but can also be bent or curved. The body further comprises a back wall 93 extending between the side walls. The back wall 93 is preferably curved at least on a part. A curved back wall 93 may also form top and bottom parts of the body as best shown in Figure 4. The body further comprises a front opening 95 between the side walls. The front opening is facing on a side of the unloading device, not on top of the unloading device. The opening can be delimited by the back wall 93 from the top and/or the bottom.

The unloading device comprises a rotatable mixer 20 extending between the side walls 91, 92 of the body. The purpose of the mixer is to mix the fibrous material with air, i.e. open up the fibers or decompress the fibrous material. Another function is to prevent clogging of the unloading device by moving the fibrous material within a space defined by the body 90. The mixer 20 preferably comprises a rotatable shaft 23 and a set of protrusions 24 attached to said shaft 23. The rotatable shaft can have e.g. a round or a rectangular cross-section. A motor 74 is arranged for rotating the shaft 23 via a gear 84, such as a worm gear. The motor and the gear are preferably located outside the body 90 and the motor can be controlled in terms of rotation speed and direction. Said protrusions 24 of the set of protrusions preferably comprise two non-parallel sections 25, 26. In an embodiment one of these sections 26 can be a curved plate or a planar plate made out of metal and the other section 25 can be a straight or curved rod or tube or plate. These sections being non-parallel can, for example, mean that at least one axis or plane of symmetry of a section is non-parallel to at least one axis or plane of symmetry of another section. In an embodiment, the mixer 20 comprises 5-25 protrusions or 8-12 protrusions.

The unloading device also comprises one or more rotatable pre-mixers 10, 11, 12 extending between the side walls 91, 92 of the body. The one or more pre-mixers are located next to the front opening 95 so the one or more pre-mixers are the first rotating parts to get in contact with the fibrous material being unloaded. The purpose of the one or more pre-mixers 10, 11, 12 is to pull the fibrous material into the unloading device and mix the fibrous material with air, i.e. open up the fibers or decompress the fibrous material. There may be one, two, three, four or more pre-mixers depending on the size of the front opening 95 and the size of the pre-mixers. The pre-mixers preferable cover more than 50 %, or preferably more than 80 % of the area of the front opening.

Each of the pre-mixers preferably comprises a rotatable shaft 13 and a set of protrusions 14 attached to said shaft 13. The rotatable shaft can have e.g. a round or a rectangular cross-section. Preferably, one or more motors 71, 72 is arranged for rotating each of the shafts 13 via a gear 81, 82 such as a worm gear. Preferably, each shaft has its own motor and each of the motors can be controlled in terms of rotation speed and direction, separately and independently form the other motors. In Figures 1-4, there are two motors 71, 72 and two worm gears 81, 82 for rotating three pre-mixer shafts. Two pre-mixers 10, 11 of the three pre-mixers shown in Figures 1-4 are mechanically connected via drivetrain 87 using a belt drive or gears such that rotation of pre-mixer 11 is transmitted to rotation of pre-mixer 10. Alternatively, a single motor and a gear assembly can used to rotate all the pre-mixers. Also in this case, the motor can be controlled separately and independently from all other motors of the unloading device. The motors and the gears are preferably located outside the body 90. Said protrusions 14 of the set of protrusions preferably comprise two non-parallel sections 15, 16. In an embodiment one of these sections 16 can be a planar plate or a curved plate made out of metal and the other section 15 can be a straight or curved rod or tube or plate. In an embodiment, the both sections are made out of a single plate and separated by a bend on the plate defining a 30°-60° angle between the two sections. These sections being non-parallel can, for example, mean that at least one axis or plane of symmetry of a section is non-parallel to at least one axis or plane of symmetry of another section. In an embodiment, each of the one or more pre-mixers comprises 5-25 protrusions or 8-12 protrusions.

Shown in Figures 1-4 below the pre-mixers and the mixer, is a rotatable feeder screw 30. Preferably, a motor 73 is arranged for rotating the feeder screw 30 via a gear 83, such as a worm gear. The feeder screw of this embodiment has two helical protrusions 31, 32 in opposing directions along a shaft 33. Rotation of the feeder screw collects and moves fibrous material, loosened by the pre-mixers and the mixer, to a post-mixer 40 located below the feeder screw 30 in Figures 1-4. A channel 38 between the feeder screw 30 and the post-mixer 40 is located in the middle line between the side walls 91, 92 which is why the feeder screw has two helical protrusions in opposing directions. This way a single feeder screw can be used for moving the fibrous material from sides of the body to the center of the body in horizontal direction. Alternatively, two separate feeder screws could be used for the same effect. If the channel 38 to the post-mixer was located next to a side wall, then a single helical protrusion on the feeder screw would be enough. A part of the feeder screw 30 is preferably covered with a cover 34 which prevents the fibrous material from entering the feeder screw from certain directions, mostly from the topside in this embodiment. The cover prevents fibrous material from falling to the channel between the feeder screw 30 and the post-mixer 40 on its own, due to the gravity. With the cover 34, the amount of fibrous material entering the post-mixer 40 in a given time period can be controlled by controlling rotation speed of the feeder screw. This can be achieved by controlling rotation speed of the motor 73. The cover preferably covers a part or a portion of the feeder screw and the cover is preferably located between the feeder screw 30 and the mixer 20, but also between the feeder screw and the one or more pre-mixers. In an embodiment, the cover 34 covers an area above the feeder screw 30, said area being on top of an opening to the channel 38 between the feeder screw and the post-mixer.

In order to prevent overfilling and clogging of the unloading device, it can be provided with an overfill sensor 99. The overfill sensor can be used for controlling an input to the unloading device 100. The overfill sensor can function in various ways as long as a signal is generated when density of the fibrous material reaches a predetermined threshold inside the unloading device. The overfill sensor 99 is preferably located within the same space as the one or more pre-mixers. The overfill sensor can e.g. control the rotation of the pre-mixers such that in an event of an overfill, the rotation of the pre-mixers is stopped by stopping the one or more motors 71, 72 connected to the shafts of the pre-mixers. The signal from the overfill sensor can also be used for controlling transfer of the fibrous material within reach of the one or more pre-mixers so that the pre-mixers will continue rotating but cannot pull in anymore fibrous material as long as the overfilled state persists. Preferably, each of the pre-mixers can be controlled separately and independently of other pre-mixers. This separate control allows for processing of various different fibrous materials with the same device. It also enables a user of the device to resolve an overfilling situation by simply operating the rotation speeds of the motors or by reversing the direction of rotation of the motors.

The post-mixer 40 of the unloading device 100 is located between said rotatable feeder screw 30 and a rotary feeder 50. The fibrous material fed by the feeder screw enters the post-mixer 40 which again loosens, opens up and/or decompresses the fibrous material which may have experienced some compressing in the feeder screw 30. Preferably, a motor 76 is arranged for rotating a shaft or shafts of the post-mixer via a gear 86, such as a worm gear. The rotation speed of the post-mixer 40, together with the rotation speed of the feeder screw 30 control the amount of fibrous material which enters the rotary feeder 50, shown below the post-mixer 40 in Figures 1-4. Both these rotation speeds can be controlled independently of each other.

The unloading device further comprises the rotary feeder 50. In an embodiment, the rotary feeder 50 is a rotary airlock feeder which has in input channel for air and an output channel for air and loose fibrous material which is being fed to the rotary airlock feeder 50 by the post-mixer 40. Thus, the fibrous material is transferred with the air flow, i.e. pneumatically. Preferably, a motor 75 is arranged for rotating a shaft of the rotary airlock feeder via a gear 85, such as a worm gear. Preferably, the motor 75 can be controlled separately and independently for e.g. changing its rotation speed. The rotary airlock feeder prevents the input of air from entering the post-mixer 40 and channel 38. A hose can be attached to the output channel of the rotary airlock feeder so that the output of the decompressed fibrous material can be directed to a desired place, e.g. inside a building. In an embodiment, a hose reel 98 is provided on the unloading device to store the hose when it's not being used.

In an embodiment where the loose fibrous material is not transported pneumatically, the rotary feeder 50 does not have to be rotary airlock feeder because there is no air flow to be blocked. The unloading device 100 can also be used with other means of transporting the unloaded material. For example, a conveyor belt or another screw feeder can be used below the rotary feeder 50 to move the unloaded material further away from the unloading device.

We have now described parts and functions of the unloading device according to an embodiment of the present disclosure. The unloading device 100 is intended to be used with a container into which loose, fibrous material has been tightly packed or compressed. The container has an opening through which the fibrous material can be unloaded and the unloading device is installed or attached so that the front opening 95 faces the opening of the container. To be able to unload directly from a container on a lorry, the opening of the container must be on a side of the container, preferably on a short side of the container. This feature enables the unloading device to be integrated into a feeder system of the container which can be set to input material automatically in to the unloading device. For this reason, the front opening 95 of the unloading device is also facing sideways and thus the fibrous material will not fall into the unloading device by means of gravity. The fibrous material must be provided into contact with the pre-mixers by e.g. pushing the fibrous material towards the unloading device. In other words, the front opening 95 faces to a direction normal to the direction of gravity of the Earth when the unloading device is in operation.

The compressed fibrous material inside the container can come into contact with the pre-mixers 10, 11, 12 of the unloading device by means of manual pushing of the fibrous material towards the unloading device, and/or by means of one or more feeders or feeding devices operating within the container. As the fibrous material inside the container comes into contact with the rotating pre-mixers of the unloading device, the fibrous material is being pulled into the unloading device and at the same time the fibers of the material are being loosened and decompressed. The fibrous material inside the unloading device is being processed by the rotating mixer 20 which further decompresses and loosens the fibers. A portion of the loosened fibrous material inside the unloading device enters the feeder screw near the side walls 91, 92. The rotation of the feeder screw 30 moves the fibrous material into the channel 38 and from there the material enters the post-mixer 40. The post-mixer again loosens and decompresses the fibrous material and outputs it to the rotary airlock feeder 50. As the rotary airlock feeder rotates, it delivers the loosened fibrous material into a space between input and output channels. Air blown through the input channel moves the loosened fibrous material along with the air flow and into the output channel. A hose connected to the output channel of the rotary airlock feeder transports the loosened fibrous material to a desired place with the air flow.

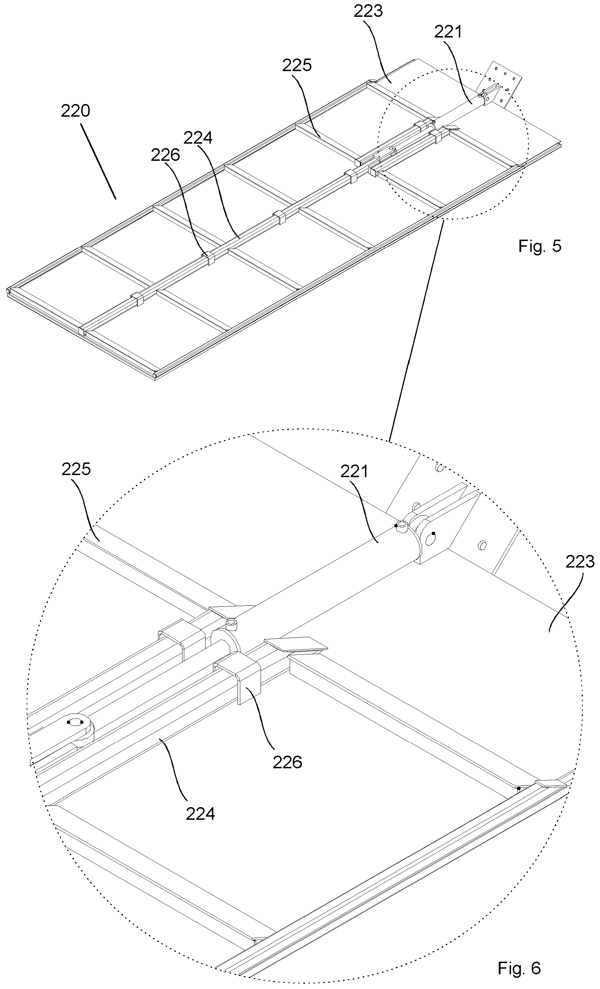

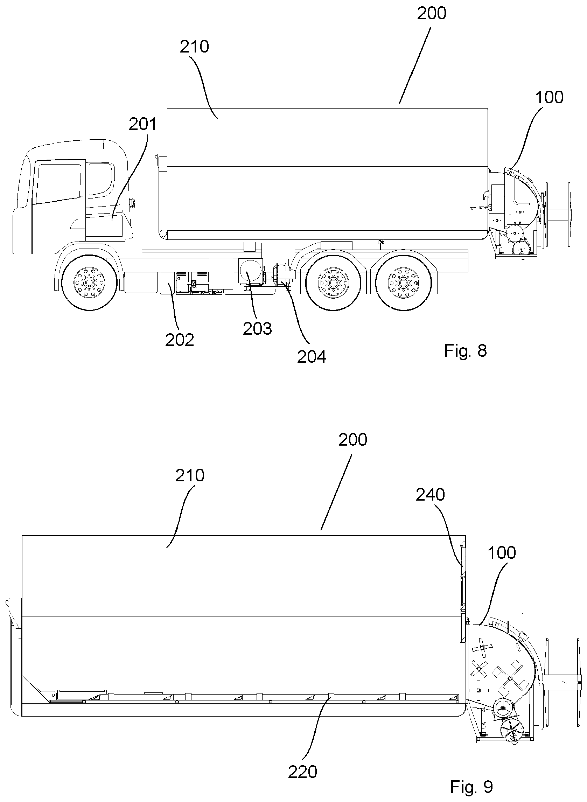

Another aspect of the invention is an unloading system, parts of which are illustrated in Figures 5-9. Figure 9 shows a cross-section of an embodiment of the unloading system. The unloading system comprises a container 200 into which a horizontal feeder 220 and a vertical feeder 240 have been installed. In another embodiment, the container comprises only one feeder, the horizontal feeder 220 or the vertical feeder 240. The container has an opening and facing that opening, an unloading device according to any embodiment of the present disclosure, has been attached. The front opening 95 of the unloading device 100 is aligned with the opening of the container such that fibrous material can be transferred from the container 200 to the unloading device 100. The container has the horizontal feeder 220 installed onto a floor of the container 200 and the vertical feeder 240 is installed onto inside wall above the opening of the container. Both the horizontal feeder and the vertical feeder are provided for moving the fibrous material towards the opening of the container to be in reach of the one or more pre-mixers 10, 11, 12 of the unloading device. The container 200 preferably has a tapering top part 210 tapering towards the highest point of the top part 210. The top part may have for example a cross-section in longitudinal direction of half of a circle or ellipse. This shape prevents the fibrous material from being clogged or stuck on top part 210 of the container 200.

Figures 5 and 6 show details of the horizontal feeder 220 shown also in Figure 9. The horizontal feeder of this embodiment comprises an actuator for generating reciprocating movement. In an embodiment, the actuator is a piston 221 operated by fluid pressure, i.e. a pneumatic or hydraulic piston. A first end of the piston 221 is attached to a base plate 223 or configured to be attached directly to the container 200. A second end of the piston 221, movable relative to the first end of the piston, is attached to a frame 224. The frame 224 is movable in relation to the base plate 223 and the container 200. Movement of the frame is restricted by guides 226 attached to the base plate 223 or directly to the container in absence of a base plate. The guides 226 ensure substantially reciprocating motion of the frame 224 when the piston 221 is operated. And finally, the horizontal feeder comprises wedges 225 extending in direction normal to the direction of the reciprocating movement caused by the piston. The wedges 225 have a thick end and a tapering to a thin end wherein the tapering is in the direction of the reciprocating movement caused by the piston. The thick end of the wedges faces towards the unloading device 100 and the opening of the container. The reciprocating movement caused by operation of the piston 221 moves the wedges back and forth inside the container 200 and the tapering of the wedges allows movement of the wedges away from the unloading device without significantly moving the fibrous material inside the container. However, the movement in opposite direction moves the fibrous material towards the unloading device 100 inside the container due to the shape of the wedges. The horizontal feeder could also be e.g. a conveyor belt or some other feeding device which can move material in horizontal, or substantially horizontal, direction.

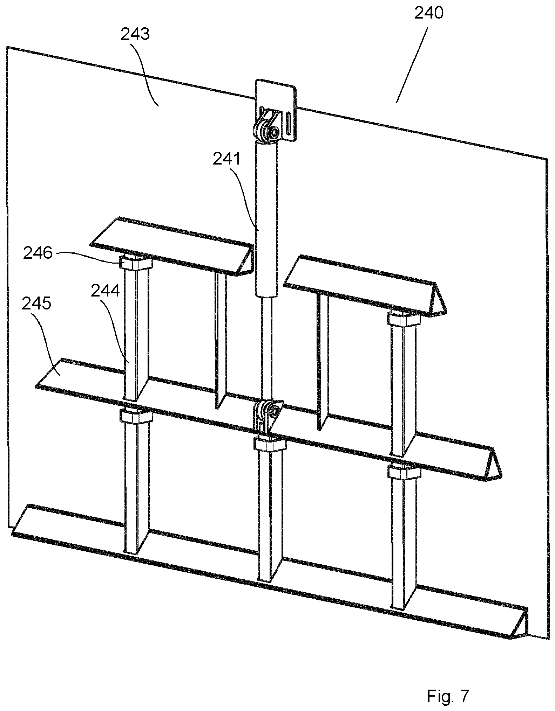

Figure 7 shows details of the vertical feeder 240 shown also in Figure 9. The vertical feeder of this embodiment comprises an actuator for generating reciprocating movement. In an embodiment, the actuator is a piston 241 operated by fluid pressure, i.e. a pneumatic or hydraulic piston. A first end of the piston 241 is attached to a base plate 243 or configured to be attached directly to the container 200. A second end of the piston 241, movable relative to the first end of the piston, is attached to a frame 244. The frame 244 is movable in relation to the base plate 243 and the container 200. Movement of the frame is restricted by guides 246 attached to the base plate 243 or directly to the container in absence of a base plate. The guides 246 ensure substantially reciprocating motion of the frame 244 when the piston 241 is operated. And finally, the vertical feeder comprises wedges 245 extending in direction normal to the direction of the reciprocating movement caused by the piston. In the embodiment shown in Fig. 7, the length of the wedges has been adapted to a curved cross-section of the top part 210 of the container 200. The wedges 245 have a thick end and a tapering to a thin end wherein the tapering is in the direction of the reciprocating movement caused by the piston. The thick end of the wedges faces towards the unloading device 100 and the opening of the container, i.e. typically downwards. The reciprocating movement caused by operation of the piston 241 moves the wedges back and forth inside the container 200 and the tapering of the wedges allows movement of the wedges away from the unloading device without significantly moving the fibrous material inside the container. However, the movement in opposite direction moves the fibrous material towards the unloading device 100 inside the container due to the shape of the wedges.

Figure 8 illustrates an unloading system of an embodiment installed to a vehicle, such as a truck. The unloading system of this embodiment comprises a container 200 having a tapered top part 210. The truck is preferably equipped with a typical tilting mechanism for the container whereby the container can be tilted. A horizontal feeder 220 and a vertical feeder 240 have been installed inside the container 200 as shown in cross-section in Fig. 9. The container has on opening in lower part of the wall in right-hand side of the container (in Figures 8 and 9), i.e. the bottom part of the back wall of the container. The unloading device 100 has been attached to the container in such a way that the front opening 95 faces the opening of the container 200. The truck comprises a control unit 201 which operates a generator unit 202, an electric motor unit 203 and a compressor unit 204. The control unit 201 can be used remotely with a remote controller 300. The remote controller can also operate the unloading device and its motors.

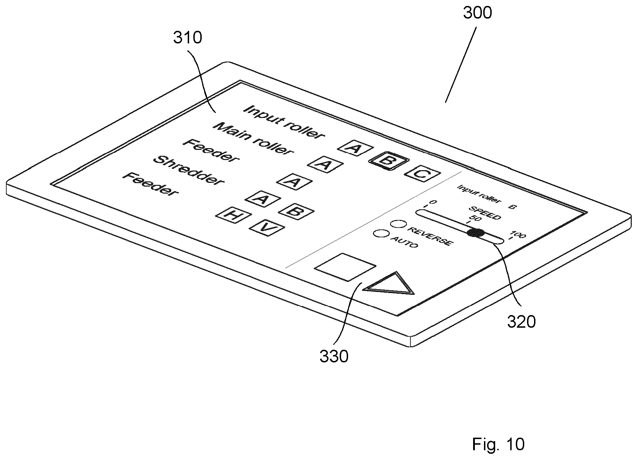

An embodiment of the remote controller is illustrated in Figure 10. The remote controller 300 may be a wired or a wireless device for controlling the motors of the unloading device. Preferably, the remote controller has a selection panel 310 where each motor of the unloading device can be controlled separately and independently. Preferably, each rotatable shaft of the unloading device comprises a dedicated motor that can be controlled separately and independently with the remote controller. Alternatively, the motors of the unloading device can be arranged in groups of motors wherein each group of motors is associated with a certain function. For example, one group of motors is configured to perform premixing, one group is configured to perform mixing, one group is configured to perform post-mixing, and so on. Each of these groups of motors for a certain function can be controlled separately and independently of other groups of motors.

In an embodiment, the remote controller comprises a speed control panel 320 for adjusting speed of a selected motor or function or group of motors. The speed control panel 320 preferably comprises option to run a selected motor in reverse for opening up a blockage or a congestion within the unloading device. The remote controller also comprises a main switch panel 330 for turning the unloading device on and off.

The separate and independent controlling of motors or groups of motors is important for facilitating remote use of the device. A user of the unloading device is most of the time holding and directing the far end of an unloading hose in a location that is distant from the unloading device itself and often difficult to reach. A typical location is an attic or a roof of a house where insulation is installed. The user must be able to control the operation of the unloading device remotely in order to use the unloading device without assistance from another user. The user can only see the output from the hose and it's highly preferable that the user could solve overfilling/congestion issues remotely without accessing the unloading device itself. All this can be achieved with the independent controlling of motors or motor groups of the unloading device.

One further advantage of being able to control the motors independently of other motors is that the unloading device can be quickly set to work with different kinds of materials. The operator is able to change the settings even on-site if needed. The unloading device can be used to unload materials like mineral wool, glass wool, stone wool, saw dust, loose insulation material consisting of wood fiber batts, or other loose fibrous material. There is no need to change parts and in a preferred embodiment, settings for different materials are stored as presets to the remote controller 300.

The generator unit 202 generates electricity which can be used for powering the unloading device 100, the electric motor unit 203 and the compressor unit 204 for producing compressed air. The compressed air can be used for operating the pistons of the horizontal feeder 220 and the vertical feeder 240 - as well as for blowing air through the rotary airlock feeder 50 of the unloading device 100. The overfill sensor 99 of the unloading device 100 is preferably configured to transmit signals to the control unit 201 whereby the horizontal feeder 220 and the vertical feeder 240 are controllable based on the signal of the overfill sensor 99. When an overfilled state is detected, the overfill sensor transmits a signal to the control unit 201 which stops the operation of the horizontal feeder 220 and the vertical feeder 240. The signal from the overfill sensor can also be used for controlling tilting of the container 200. In an embodiment, the described sensor and related action can be the opposite, i.e. a sensor detecting empty room inside the unloading device and activating the horizontal feeder and the vertical feeder based on that.

The described embodiments of the unloading system can be used by a single operator. The unloading system can independently unload, decompress and blow the fibrous material stored in the container. The operator is needed at the far end of an output hose to direct the flow of fibrous material from the hose and observe the process. Using the remote controller, the operator is able to switch the unloading system on and off as needed. The user is also able to control the flow of the fibrous material by controlling rotation speeds of the motors of the unloading device. Furthermore, the user is able to solve overfilling/congestion problems by controlling motors of the unloading device. In an overfilled stated of the unloading device, some motors may have to be stopped, some motors may have to be reversed and some motors may require increased or decreased rotating speed. The user can perform all these functions with the remote controller without accessing the unloading device directly.

The invention and its embodiments are not limited to only the examples presented above, rather they may vary within the scope of the claims.

## Claims

1. An unloading device (100) comprising
a body (90) having side walls (91, 92), a back wall (93) extending between the side walls and a front opening (95) between the side walls,
a rotatable mixer (20) extending between the side walls,
one or more rotatable pre-mixers (10, 11, 12) extending between the side walls and located between said rotatable mixer (20) and said front opening (95),
a rotary feeder (50),
a rotatable feeder screw (30), and
a rotatable post-mixer (40) located between said rotatable feeder screw (30) and said rotary feeder (50),
wherein the unloading device (100) is **characterized in that** it comprises
one or more independently controllable motors (71, 72) for rotating said one or more rotatable pre-mixers (10, 11, 12),
an independently controllable motor (74) for rotating said rotatable mixer (20),
an independently controllable motor (73) for rotating said post-mixer (40), and
a remote controller configured to control said independently controllable motors (71, 72, 73, 74).

2. An unloading device according to claim 1, wherein the unloading device further comprises an overfill sensor (99) for controlling an input to the unloading device (100).

3. An unloading device according to claim 1, wherein the rotary feeder (50) is a rotary airlock feeder.

4. An unloading device according to any one of claims 1 to 3, wherein said one or more pre-mixers (10, 11, 12) each comprise a rotatable shaft (13) and a first set of protrusions (14) attached to said shaft (13).

5. An unloading device according to claim 4, wherein protrusions (14) of the first set of protrusions comprise two non-parallel sections (15, 16).

6. An unloading device according to any one of claims 1 to 5, wherein said mixer (20) comprises a rotatable shaft (23) and a second set of protrusions (24) attached to said shaft (23).

7. An unloading device according to claim 6, wherein protrusions (24) of the second set of protrusions comprise two non-parallel sections (25, 26).

8. An unloading device according to any one of claims 1 to 7, wherein the unloading device further comprises a cover (34) partially covering said feeder screw (30), said cover (34) being located between the feeder screw (30) and the rotatable mixer (20).

9. An unloading device according to any one of claims 1 to 8, wherein the feeder screw (30) comprises one or more helical protrusions (31, 32).

10. An unloading device according to any one of claims 1 to 9, wherein the unloading device comprises a plurality of motors and each of those motors is independently controllable and the remote controller configured to control said plurality of motors independently.

11. An unloading device according to any one of claims 1 to 10, wherein the front opening (95) faces to a direction normal to the direction of gravity when the unloading device is in operation.

12. An unloading system comprising an unloading device (100) according to any one of claims 1 to 11, wherein the unloading system further comprises:
a container (200);
a horizontal feeder (220) inside the container; and
a vertical feeder (240) inside the container.

13. An unloading system according to claim 12, wherein the horizontal feeder (220) comprises a piston (221) configured to reciprocatively move parts of said horizontal feeder (220).

14. An unloading system according to claim 13, wherein said parts of the horizontal feeder (220), that are configured to be moved reciprocatively, comprise wedges (225) having a thicker end and a tapering to a thinner end.

15. An unloading system according to any one of claims 12 to 14, wherein the vertical feeder (240) comprises wedges (245) having a thicker end and a tapering to a thinner end, and in addition a piston (241) configured to reciprocatively move parts of said the vertical feeder (240).

## Patentansprüche

1. Entladevorrichtung (100), umfassend:
einen Körper (90) mit Seitenwänden (91, 92), eine Rückwand (93), die sich zwischen den Seitenwänden erstreckt, und eine vordere Öffnung (95) zwischen den Seitenwänden,
einen drehbaren Mischer (20), der sich zwischen den Seitenwänden erstreckt,
einen oder mehrere drehbaren Vormischer (10, 11, 12), die sich zwischen den Seitenwänden erstrecken und sich zwischen dem drehbaren Mischer (20) und der vorderen Öffnung (95) befinden,
eine Zellenradschleuse (50),
eine drehbare Zuführschnecke (30) und
einen drehbaren Nachmischer (40), der sich zwischen der drehbaren Zuführschnecke (30) und der Zellenradschleuse (50) befindet,
wobei die Entladevorrichtung (100) **dadurch gekennzeichnet ist, dass** sie umfasst:
einen oder mehrere unabhängig voneinander steuerbare Motoren (71, 72) zum Drehen des einen oder der mehreren drehbaren Vormischer (10, 11, 12),
einen unabhängig steuerbaren Motor (74) zum Drehen des drehbaren Mischers (20),
einen unabhängig steuerbaren Motor (73) zum Drehen des Nachmischers (40) und
eine Fernsteuerung, die zum Steuern der unabhängig steuerbaren Motoren (71, 72, 73, 74) konfiguriert ist.

2. Entladevorrichtung nach Anspruch 1, wobei die Entladevorrichtung ferner einen Überfüllsensor (99) zum Steuern einer Eingabe in die Entladevorrichtung (100) umfasst.

3. Entladevorrichtung nach Anspruch 1, wobei die Zellenradschleuse (50) eine Zellenradluftschleuse ist.

4. Entladevorrichtung nach einem der Ansprüche 1 bis 3, wobei der eine oder die mehreren Vormischer (10, 11, 12) jeweils eine drehbare Welle (13) und einen ersten Satz von an der Welle (13) angebrachten Vorsprüngen (14) umfasst/ umfassen.

5. Entladevorrichtung nach Anspruch 4, wobei die Vorsprünge (14) des ersten Satzes von Vorsprüngen zwei nicht parallele Abschnitte (15, 16) umfassen.

6. Entladevorrichtung nach einem der Ansprüche 1 bis 5, wobei der Mischer (20) eine drehbare Welle (23) und einen zweiten Satz von an der Welle (23) angebrachten Vorsprüngen (24) umfasst.

7. Entladevorrichtung nach Anspruch 6, wobei die Vorsprünge (24) des zweiten Satzes von Vorsprüngen zwei nicht parallele Abschnitte (25, 26) umfassen.

8. Entladevorrichtung nach einem der Ansprüche 1 bis 7, wobei die Entladevorrichtung ferner eine Abdeckung (34) umfasst, die die Zuführschnecke (30) teilweise abdeckt, wobei sich die Abdeckung (34) zwischen der Zuführschnecke (30) und dem drehbaren Mischer (20) befindet.

9. Entladevorrichtung nach einem der Ansprüche 1 bis 8, wobei die Zuführschnecke (30) einen oder mehrere schraubenförmige Vorsprünge (31, 32) umfasst.

10. Entladevorrichtung nach einem der Ansprüche 1 bis 9, wobei die Entladevorrichtung eine Mehrzahl von Motoren umfasst und jeder dieser Motoren unabhängig steuerbar ist und die Fernsteuerung dazu konfiguriert ist, die mehreren Motoren unabhängig voneinander zu steuern.

11. Entladevorrichtung nach einem der Ansprüche 1 bis 10, wobei die vordere Öffnung (95) in eine Richtung senkrecht zur Schwerkraftrichtung zeigt, wenn die Entladevorrichtung in Betrieb ist.

12. Entladesystem, umfassend eine Entladevorrichtung (100) nach einem der Ansprüche 1 bis 11, wobei das Entladesystem ferner umfasst:
einen Behälter (200);
eine horizontale Zuführeinrichtung (220) innerhalb des Behälters; und
eine vertikale Zuführeinrichtung (240) innerhalb des Behälters.

13. Entladesystem nach Anspruch 12, wobei die horizontale Zuführeinrichtung (220) einen Kolben (221) umfasst, der dazu konfiguriert ist, Teile der horizontalen Zuführeinrichtung (220) hin- und herzubewegen.

14. Entladesystem nach Anspruch 13, wobei die Teile der horizontalen Zuführeinrichtung (220), die dazu konfiguriert sind, hin- und herbewegt zu werden, Keile (225) mit einem dickeren Ende und einer Verjüngung zu einem dünneren Ende umfassen.

15. Entladesystem nach einem der Ansprüche 12 bis 14, wobei die vertikale Zuführeinrichtung (240) Keile (245) mit einem dickeren Ende und einer Verjüngung zu einem dünneren Ende und zusätzlich einen Kolben (241) umfasst, der dazu konfiguriert ist, Teile der vertikalen Zuführeinrichtung (240) hin- und herzubewegen.

## Revendications

1. Dispositif de déchargement (100) comprenant
un corps (90) comportant des parois latérales (91, 92), une paroi arrière (93) s'étendant entre les parois latérales et une ouverture avant (95) entre les parois latérales,
un mélangeur rotatif (20) s'étendant entre les parois latérales,
un ou plusieurs pré-mélangeurs rotatifs (10, 11, 12) s'étendant entre les parois latérales et situés entre ledit mélangeur rotatif (20) et ladite ouverture avant (95),
un dispositif d'alimentation rotatif (50),
une vis d'alimentation rotative (30) et
un post-mélangeur rotatif (40) situé entre ladite vis d'alimentation rotative (30) et ledit dispositif d'alimentation rotatif (50),
dans lequel le dispositif de déchargement (100) est **caractérisé en ce qu'**il comprend
un ou plusieurs moteurs commandables indépendamment (71, 72) pour faire tourner lesdits un ou plusieurs pré-mélangeurs rotatifs (10, 11, 12),
un moteur commandable indépendamment (74) pour faire tourner ledit mélangeur rotatif (20),
un moteur commandable indépendamment (73) pour faire tourner ledit post-mélangeur (40), et
une télécommande configurée pour commander lesdits moteurs commandables indépendamment (71, 72, 73, 74).

2. Dispositif de déchargement selon la revendication 1, dans lequel le dispositif de déchargement comprend en outre un capteur de trop-plein (99) pour commander une entrée vers le dispositif de déchargement (100).

3. Dispositif de déchargement selon la revendication 1, dans lequel le dispositif d'alimentation rotatif (50) est un dispositif d'alimentation rotatif à sas.

4. Dispositif de déchargement selon l'une quelconque des revendications 1 à 3, dans lequel lesdits un ou plusieurs pré-mélangeurs (10, 11, 12) comprennent chacun un arbre rotatif (13) et un premier ensemble de saillies (14) fixées audit arbre (13).

5. Dispositif de déchargement selon la revendication 4, dans lequel les saillies (14) du premier ensemble de saillies comprennent deux sections non parallèles (15, 16).

6. Dispositif de déchargement selon l'une quelconque des revendications 1 à 5, dans lequel ledit mélangeur (20) comprend un arbre rotatif (23) et un deuxième ensemble de saillies (24) fixées audit arbre (23).

7. Dispositif de déchargement selon la revendication 6, dans lequel les saillies (24) du deuxième ensemble de saillies comprennent deux sections non parallèles (25, 26).

8. Dispositif de déchargement selon l'une quelconque des revendications 1 à 7, dans lequel le dispositif de déchargement comprend en outre un couvercle (34) recouvrant partiellement ladite vis d'alimentation (30), ledit couvercle (34) étant situé entre la vis d'alimentation (30) et le mélangeur rotatif (20).

9. Dispositif de déchargement selon l'une quelconque des revendications 1 à 8, dans lequel la vis d'alimentation (30) comprend une ou plusieurs saillies hélicoïdales (31, 32).

10. Dispositif de déchargement selon l'une quelconque des revendications 1 à 9, dans lequel le dispositif de déchargement comprend une pluralité de moteurs et chacun de ces moteurs est commandable indépendamment et la télécommande est configurée pour commander ladite pluralité de moteurs indépendamment.

11. Dispositif de déchargement selon l'une quelconque des revendications 1 à 10, dans lequel l'ouverture avant (95) est orientée dans une direction normale à la direction de la gravité lorsque le dispositif de déchargement est en fonctionnement.

12. Système de déchargement comprenant un dispositif de déchargement (100) selon l'une quelconque des revendications 1 à 11, dans lequel le système de déchargement comprend en outre :
un conteneur (200) ;
un dispositif d'alimentation horizontal (220) à l'intérieur du conteneur; et
un dispositif d'alimentation vertical (240) à l'intérieur du conteneur.

13. Système de déchargement selon la revendication 12, dans lequel le dispositif d'alimentation horizontal (220) comprend un piston (221) configuré pour déplacer de manière alternative des parties dudit dispositif d'alimentation horizontal (220).

14. Système de déchargement selon la revendication 13, dans lequel lesdites parties du dispositif d'alimentation horizontal (220) qui sont configurées pour être déplacées de manière alternative comprennent des coins (225) ayant une extrémité plus épaisse et un rétrécissement vers une extrémité plus mince.

15. Système de déchargement selon l'une quelconque des revendications 12 à 14, dans lequel le dispositif d'alimentation vertical (240) comprend des coins (245) ayant une extrémité plus épaisse et un rétrécissement vers une extrémité plus mince, et en outre un piston (241) configuré pour déplacer de manière alternative des parties dudit dispositif d'alimentation vertical (240).
